(19) **Europäisches Patentamt**
**European Patent Office**
**Office européen des brevets**

(11) Veröffentlichungsnummer: **0 158 878**
**B1**

(12) **EUROPÄISCHE PATENTSCHRIFT**

(45) Veröffentlichungstag der Patentschrift:
**13.07.88**

(51) Int. Cl.⁴: **F 16 L 25/00**, F 16 L 33/00

(21) Anmeldenummer: **85103630.1**

(22) Anmeldetag: **27.03.85**

(54) **Steckanschluss für Schläuche.**

(30) Priorität: **30.03.84 DE 8409848 U**

(43) Veröffentlichungstag der Anmeldung:
**23.10.85 Patentblatt 85/43**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**DE - A - 2 454 752**
**GB - A - 739 575**
**US - A - 4 415 389**

(73) Patentinhaber: **REHAU AG + Co, Rheniumhaus,
D-8673 Rehau (DE)**

(72) Erfinder: **Der Erfinder hat auf seine Nennung verzichtet**

## Beschreibung

Die Neuerung betrifft einen Steckanschluß für Schläuche, insbesondere für dünnwandige, gewellte Kunststoffschläuche, bestehend aus einem muffenartigen Verbindungsteil aus weich eingestelltem Kunststoffmaterial, welches mit dem Endbereich des Wellschlauches durch Überspritzung fest verbunden ist.

Derartige Verbindungsteile sind bei spiralgewellten Schläuchen bekannt, welche aus einem extrudierten Grundprofil bestehen, das in einem speziellen Arbeitsgang über die Flanken zu einem Schlauch gewickelt und dabei an den Flanken verklebt bzw. verschweißt wird. Das Grundprofil kann dabei im Querschnitt so gestaltet sein, daß der später gewickelte Schlauch im Innendurchmesser praktisch glatt ausgeführt ist und im Außendurchmesser einer groben Wendel mit großen Zwischenräumen entspricht.

Das Anspritzen einer Verbindungsmuffe mit den dabei auftretenden Spritzdrücken und -temperaturen ist insofern unproblematisch, als durch die spezielle Ausgestaltung des Grundprofils der aus der spiraligen Wicklung erzeugte Schlauch längsstabil ist, so daß er beim Anspritzvorgang auch im Endbereich der Übergreifung durch die Verbindungsmuffe nicht zusammengedrückt werden kann. Darüber hinaus wird durch die groben Zwischenräume am spiralig gewellten Außenumfang des Schlauches eine gute mechanische Verankerung der angespritzten Verbindungsmuffe am übergriffenen Schlauchende erzielt.

Die Neuerung hat sich die Aufgabe gestellt, dieses bei spiralgewellten Schläuchen bekannte Verbindungsteil auch für andere, dünnwandige, gewellte Kunststoffschläuche benutzbar zu machen. Neuerungsgemäß wird dazu vorgeschlagen, daß der dünnwandige Kunststoffschlauch ein ringgewellter Schlauch ist und daß der Abstand zwischen den äußeren Ringwellungen im Bereich der Überspritzung unter Beibehaltung des Abstandes zwischen den inneren Ringwellungen von dem Kunststoffmaterial des muffenartigen Verbindungsteils bis zum Grund der Ringwellungen ausgefüllt ist.

Für die Neuerung ist es wesentlich, daß die Ringwellungen des dünnwandigen Kunststoffschlauches auch im Bereich der Übergreifung durch das Verbindungsteil erhalten bleiben. Dadurch wird eine definierte Verankerung des Verbindungsteils in den Ringwellungen der Übergreifung ermöglicht. Die Festlegung des Verbindungsteils auf dem Ende des Wellschlauches im Bereich der Übergreifung erfolgt vorteilhaft derart, daß die nach außen weisenden Täler der Ringwellungen mit dem Kunststoffmaterial des Verbindungsteiles ausgefüllt werden. Dadurch erfolgt eine Verkrallung des Verbindungsteils auf dem ringgewellten Außenumfang des Schlauches. Das Verbindungsteil wird jedoch nicht nur mechanisch auf dem äußeren Umfang des ringgewellten Schlauches festgelegt, sondern es erfolgt auch eine Umfangsverklebung und – bei Verwendung geeigneter Spritzmaterialien – eine umfängliche Verschweißung. Dieser Vorteil wird dadurch erzielt, daß das Kunststoffmaterial des Verbindungsteils beim Vorgang des Anspritzens mit hohen Temperaturen auf den äußeren Umfang der Ringwellungen des Schlauches im Bereich der Übergreifung trifft. Dies führt zu einer entsprechenden Erwärmung der außenliegenden Bereiche der Ringwellungen und damit im günstigsten Falle zu einer Verschweißung zwischen dem äußeren Umfang der Ringwellungen und dem Kunststoffmaterial des Verbindungsteils im Bereich der Überspritzung.

Als wesentliches Merkmal der Neuerung ist weiter zu beachten, daß die inneren Ringwellungen des Schlauches im Bereich der Übergreifung beibehalten bleiben. Hierfür lassen sich mechanische Vorrichtungen verwenden, die beispielsweise von innen teilweise oder ganz in die inneren Ringwellungen des Schlauchendes wenigstens im Bereich der Übergreifung eingreifen und die inneren Ringwellungen gegen den Einspritzdruck des Kunststoffmaterials bei der Erzeugung des Verbindungsteils in ihrer Position halten. Derartige Einrichtungen können nach Beendigung des Spritzvorganges aus dem Inneren des Wellrohres wieder entfernt werden.

Die Aufrechterhaltung der inneren Ringwellungen führt gleichzeitig zur Aufrecherhaltung der äußeren Ringwellungen im Bereich der Überspritzung. Auf diese Weise läßt sich die optimale Halterung des Verbindungsteils auf dem Ende des Kunststoffschlauches im Bereich der Übergreifung erzielen.

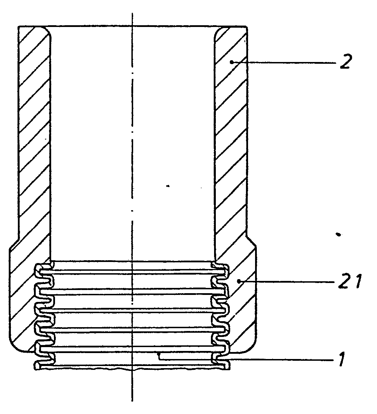

Die Zeichnung zeigt das Ende eines ringgewellten Kunststoffschlauches 1 mit dem angeformten Verbindungsteil 2. Das Verbindungsteil 2 weist eine Durchmesservergrösserung im Bereich der Übergreifung 21 aus. Die Zeichnung zeigt deutlich, daß die äußeren Öffnungen der einzelnen Ringwellungen mit dem Kunststoffmaterial des Verbindungsteils ausgefüllt sind. Weiterhin ist zu erkennen, daß die inneren Öffnungen der Ringwellungen erhalten geblieben sind, obwohl der Spritzvorgang mit der Ausfüllung der äußeren Öffnungen der Ringwellungen und den dabei auftretenden Temperaturen und Drücken erfolgt ist.

Die Vorrichtung zur Beibehaltung des Abstandes zwischen den inneren Ringwellungen ist in der Zeichnung nicht dargestellt.

## Patentanspruch

Steckanschluß für Schläuche, insbesondere für dünnwandige, gewellte Kunststoffschläuche, bestehend aus einem muffenartigen Verbindungsteil aus weich eingestelltem Kunststoffmaterial, welches mit dem Endbereich des Wellschlauches durch Überspritzung fest verbunden ist, dadurch gekennzeichnet, daß der dünnwandige Kunststoffschlauch ein ringgewellter Schlauch ist und daß der Abstand zwischen den äußeren Ringwellungen im Bereich der Überspritzung unter Beibehaltung des Abstandes zwischen den inneren Ringwellungen von dem Kunststoffmaterial des muffenartigen Verbindungsteils bis zum Grund der äußeren Ringwellungen ausgefüllt ist.

## Claim

Plug connection for hoses, in particular thin-walled, corrugated plastic hoses, consisting of a sleeve-like connecting part of soft plastic material which is firmly joined to the end region of the corrugated hose by over-moulding, characterized in that the thin-walled plastic hose is a hose having annular corrugations, and that the distance between the external annular corrugations in the over-moulding region is filled by the plastic material of the sleeve-like connecting part to the base of the external annular corrugations, the distance between the internal annular corrugations being maintained.

**Revendication**

Raccord enfichable pour tuyaux, en particulier pour tuyaux ondulés à parois minces en matière plastique, se composant d'une pièce de raccordement en forme de manchon en matière synthétique assouplie, fixée de façon inamovible à l'extrémité du tuyau ondulé par un revêtement appliqué par projection, caractérisé en ce que le tuyau en matière plastique à parois minces est un tuyau à ondulations annulaires et que l'espace situé entre les ondulations annulaires extérieures dans la zone recouverte par le revêtement projeté est rempli jusqu'au fond des ondulations annulaires extérieures par la matière plastique de la pièce de raccordement en forme de manchon, l'espace compris entre les ondulations annulaires intérieures étant conservé.